# EUROPEAN PATENT APPLICATION

(11) **EP 2 854 312 A1**
(43) Date of publication of application: **01.04.2015**
(21) Application number: 13290232.1
(22) Date of filing: 30.09.2013
(51) Int. Cl.: H04B 17/00

(54) **Receiver for a cellular communications network**

(71) Applicant: ALCATEL LUCENT, 92100 Boulogne-Billancourt (FR)
(72) Inventor: Gloss, Bernd, 70435 Stuttgart (DE); Wild, Thorsten, 70435 Stuttgart (DE); Schaich, Frank, 70435 Stuttgart (DE); Cesar, Bozo, 70435 Stuttgart (DE)
(74) Representative: DREISS Patentanwälte PartG mbB

(57) **Abstract**

The invention relates to a receiver (10) for a cellular communications network, wherein said receiver (10) is configured to receive radio signals (RS) from at least one further device, particularly from a transmitter of a cellular communications network, wherein said receiver (10) is configured to determine for at least one received radio signal (RS) a line of sight, LOS, measure, wherein said line of sight measure comprises information on LOS conditions associated with said received radio signal.

## Description

### Field of the invention

The invention relates to a receiver for a cellular communications network, wherein said receiver is configured to receive radio signals from at least one further device, particularly from a transmitter of a cellular communications network.

The invention further relates to a method of operating a receiver for a cellular communications network.

### Background

Today, one technique for determining radio propagation conditions within a coverage area of a cellular communications network is based on simulations which take into account potential geographical locations, e.g. for new base stations to be added. Usually, the simulations are based on models.

### Summary

It is an object of the present invention to provide an improved receiver for a cellular communications network and an improved operating method for such receiver, which enable to improve simulation scenarios for the above mentioned simulations and the underlying models.

According to the present invention, this object is achieved in that said receiver is configured to determine for at least one received radio signal a line of sight, LOS, measure, wherein said line of sight measure comprises information on LOS conditions associated with said received radio signal. This advantageously enables to characterize radio path conditions for the considered received radio signals with respect to e.g. pure line of sight signal propagation scenarios. For example, according to an embodiment, the LOS measure may be defined as a relative value ranging from e.g. 0 percent to e.g. 100 percent, said LOS measure indicating the similarity of path conditions as experienced by the received radio signal to pure line of sight signal propagation scenarios. In other words, an LOS measure of about 100 percent indicates that the received radio signal for which said LOS measure value of about 100 percent has been determined, has basically experienced pure line of sight signal propagation, i.e. without multipath propagation, shadowing and the like. In contrast, a rather low value of the LOS measure of e.g. about 10 percent may indicate that the received radio signal for which said LOS measure value of about 10 percent has been determined has basically experienced no line of sight conditions but rather multi-path propagation and scattering and the like. According to an embodiment, the LOS value may also be interpreted as an indicator giving a likelihood for pure line of sight signal propagation of a received radio signal. According to a further embodiment, instead of a scalar relative value, vector form and/or matrix form may also be used to represent the LOS measure, thus enabling to take into account a plurality of parameters influencing LOS conditions.

According to one embodiment, the determination of the LOS measure may be performed at a PHY (physical) layer (i.e., layer 1 of the OSI model). However, according to other embodiments, the determination of the LOS measure is not limited to the PHY layer, but may also alternatively or additionally be performed in other (higher) OSI layers.

According to an embodiment, said receiver is configured to determine said LOS measure depending on at least one channel impulse response of a radio channel, preferably depending on a plurality of channel impulse responses of said radio channel over time. According to a further embodiment, the channel impulse response of the radio channel may be determined by using pilot symbols transmitted to the receiver, said pilot symbols known to both the receiver and a transmitter which is sending said symbols. The pilot symbols may e.g. be defined by standardization. For example, when implementing the receiver according to the embodiments in an LTE (long term evolution) compatible mobile terminal, conventional LTE pilot symbols and/or channel measurement techniques for determining the channel impulse response may be used. Based on so obtained channel impulse response(s), the LOS measure may be determined.

A particularly precise determination of the LOS measure is enabled by an embodiment according to which a plurality of channel impulse responses are evaluated to obtain said LOS measure.

According to a further embodiment, also a signaling delay may be considered for determining the LOS measure.

According to a further embodiment, said receiver is configured to determine whether an earliest incoming path component of said channel impulse response corresponds with a strongest one of incoming path components of said channel impulse response. According to applicant's analysis, this criterion enables to precisely determine the LOS measure. Of course, this determination may also be performed for one channel impulse response and/or a plurality of channel impulse responses. This also holds true for the further criteria that may be used according to further embodiments for determining the LOS measure, which are explained below.

According to a further embodiment, said receiver is configured to determine whether a strongest one of incoming path components of said channel impulse response has a non-fading component. According to an embodiment, a non-fading component may e.g. be defined as a portion of a channel impulse response which (or the amplitude of which, respectively) does not fall below a predetermined threshold value within a predetermined observing time window. In contrast to the non-fading component, a fading component would be defined as a portion of a channel impulse response which (or the amplitude of which, respectively) does fall below a predetermined threshold value within a predetermined observing time window.

According to a further embodiment, said receiver is configured to evaluate a Doppler spectrum of said channel impulse response, preferably a Doppler spectrum of a strongest one of incoming path components of said channel impulse response. This contributes to an increased precision for determining said LOS measure.

According to a further embodiment, said receiver is configured to evaluate a correlation between various channels defined by one or more transmit antennas used for transmitting said received radio signal and one or more receive antennas used for receiving said received radio signal. This contributes to an increased precision for determining said LOS measure.

According to a further embodiment, said receiver is configured to use at least one direction of arrival, DOA, estimation technique.

According to a further embodiment, said receiver is configured to determine said LOS measure depending on a geographical position of said receiver and/or said transmitter. Thereby, a further increase of precision regarding the LOS measure is enabled. For example, according to an embodiment, it is proposed to provide the following information: (1) synchronized sender/receiver clocks (preferably synchronized to an absolute time; effect: when sender transmits data at time t and receiver receives the data at t+Δt, the receiver knows that the propagation delay is Δt), (2) the distance between sender and receiver (e.g. derived from location information) and (3) a signal runtime measurement.

A further solution to the object of the present invention is provided by a terminal for a cellular communications network, wherein said terminal comprises at least one receiver according to the embodiments. The receiver according to the embodiments may advantageously be integrated in conventional terminals for a cellular communications network. According to one embodiment, this may be achieved by adding the functionality regarding determination of the LOS measure to an existing receiver which is configured to receive RF signals from a further device such as a base station of the cellular communications network.

The integration of the receiver into a terminal is particularly beneficial since conventional pilot signals and methods of channel estimation may be used to contribute to the determination of the LOS measure. According to an embodiment, said terminal is configured to associate RSSI (Relative Signal Strength Indicator) measurements with said LOS measure and/or with position information of said terminal. For example, if a high LOS measure is determined at a specific position of the terminal, meaning that from this position signal reception is performed under line of sight conditions, RSSI measurement results of the terminal may be transformed into distance information representing a distance between the terminal and a transmitter such as the base station.

According to an embodiment, LOS measure values associated with RSSI data and/or position information may e.g. be stored locally and/or forwarded to an external device (base station, further terminal, data base, and the like), for example for further evaluation.

According to a further embodiment, said terminal is configured to provide RSSI measurements and/or said LOS measure and/or position information of said terminal (either alone or in an associated form, i.e. together, according to e.g. the preceding embodiment), to a further device, preferably by means of an application programming interface.

A further solution to the object of the present invention is provided by a base station for a cellular communications network, wherein said base station comprises at least one receiver according to the embodiments. I.e., it is also possible to integrate the receiver functionality according to the embodiments into a base station. Hence, the base station is enabled to determine a LOS measure characterizing a radio channel over which respective RF signals are received.

According to an embodiment, the base station is configured to associate RSSI measurements with said LOS measure and/or with position information of a terminal and/or with position information of said base station, wherein the position information of a terminal may e.g. be signaled from the terminal to the base station. Alternatively or in addition, the base station may derive position information of the terminal by means of triangulation. I.e., optionally, the base station (together with other base stations) triangulates the position of the transmitting terminal according to network-based positioning concepts. According to an embodiment, said step of associating may e.g. comprise storing together RSSI measurements with said LOS measure and/or with position information of a terminal and/or with position information of said base station and/or making available said data or combinations thereof to further devices.

According to a further embodiment, the base station is configured to signal to a terminal a) whether said LOS measure is determined by the base station and/or b) said LOS measure. By providing option a), a terminal served by the base station is notified of the possibility of LOS measurement, and thus, according to an embodiment, the terminal may e.g. initiate transmission of pilot signals in an uplink direction to the base station which enables the receiver of the base station to perform channel measurements that may facilitate determining a channel impulse response and thus the LOS measure.

According to a further embodiment, the option to send sounding information by a mobile terminal does not depend on the possibility of a LOS measurement but on the requirement to perform LOS measurements to come up with the property. So the terminal may be scheduled to send sounding information / pilot symbols a) when it is active or b) when a measurement campaign shall be executed.

A further solution to the object of the present invention is provided by a method of operating a receiver for a cellular communications network, wherein said receiver is configured to receive radio signals from at least one further device, particularly from a transmitter of a cellular communications network, wherein said receiver determines for at least one received radio signal a line of sight, LOS, measure, wherein said line of sight measure comprises information on LOS conditions associated with said received radio signal.

### Brief description of the figures

Further features, aspects and advantages of the present invention are given in the following detailed description with reference to the drawings in which:
- Figure 1: schematically depicts a receiver according to an embodiment,
- Figure 2: schematically depicts a terminal according to an embodiment,
- Figure 3: schematically depicts a base station according to an embodiment, and
- Figure 4: schematically depicts a simplified flow-chart of a method according to an embodiment.

### Description of the embodiments

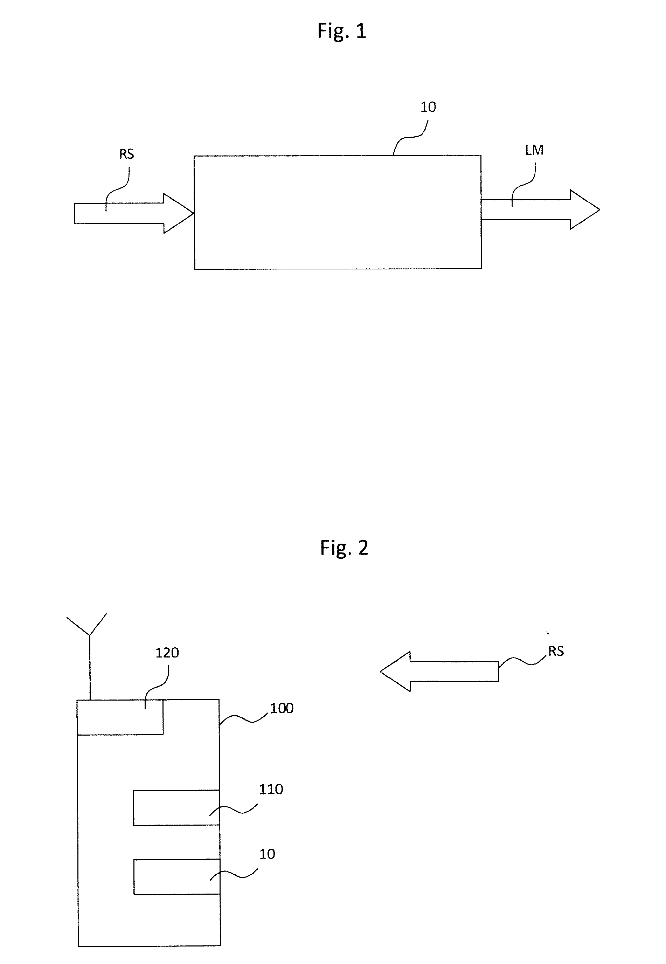

Figure 1 schematically depicts a receiver 10 for a cellular communications network. The receiver 10 is configured to receive radio signals RS from at least one further device (not shown), particularly from a transmitter of a cellular communications network.

According to a first embodiment, the receiver 10 may be implemented in a terminal of a cellular communications network, whereas the transmitter providing the radio signals RS is comprised within a base station of a cellular communications network. However, according to further embodiments, the receiver 10 as depicted by figure 1 may also be comprised within a base station of a cellular communications network, and a corresponding transmitter providing the radio signals RS may be comprised within a terminal of the cellular communications system.

According to still further embodiments, a cellular communications network is not required for proper operation of the receiver 10. Rather, the functionality of the receiver 10 explained below may also be utilized without operating the receiver 10 in the context of a cellular communications network. I.e., the principle according to the embodiments may also be applied to peer-to-peer radio communications and the like.

Returning to figure 1, the receiver 10 according to an embodiment is configured to receive the radio signals RS, and to determine for at least one received radio signal RS a line of sight, LOS, measure LM, wherein said line of sight measure LM comprises information on LOS conditions associated with said received radio signal RS. This advantageously enables to characterize radio path conditions for the considered received radio signals RS with respect to pure line of sight signal propagation scenarios.

The line of sight measure LM provided by the receiver 10 according to the embodiments advantageously enables to assess the characteristics of an actual radio signal path over which the radio signals RS have been received by the receiver 10. In other words, the line of sight measure LM e.g. enables to tell how likely it is that the radio signal RS has been received via a radio frequency propagation scenario that is comparable to a purely line of sight transmission, i.e. without multi-path propagation.

Figure 2 schematically depicts a terminal 100 according to an embodiment. The terminal 100 may e.g. be configured to operate within a cellular communications network, for example according to the UMTS or LTE standard or the like. The terminal 100 comprises processing means 110 which control the operation of the terminal 100 in a per se known manner. The terminal 100 further comprises a radio frequency interface 120 which is configured to receive and/or transmit radio frequency (RF) signals. For example, by means of the RF interface 120, the terminal 100 can receive the radio signal RS depicted by a block arrow in figure 2.

The terminal 100 of figure 2 further comprises a receiver 10 according to the embodiments. Particularly, the receiver 10 may comprise the functionality as explained above with reference to figure 1.

It is to be noted that function block 10 as depicted by figure 2 merely symbolizes the presence of the functionality of the receiver according to the embodiments within the terminal 100. According to a preferred embodiment, the functionality of the receiver 10 according to the embodiments may at least partly be integrated in the processing unit 110 and/or the radio frequency interface 120 of the terminal 100.

When the terminal 100 receives one or more radio signals RS (e.g., from a base station or another terminal), the receiver 10 according to the embodiments determines for said received radio signal(s) RS a line of sight measure LM (figure 1) which comprises information on LOS conditions associated with said received radio signal RS.

As a consequence, the terminal 100 is aware of a likelihood that the received radio signals RS are line of sight-transmitted signals or other signals such as radio signals heavily affected by multi-path propagation, scattering and the like.

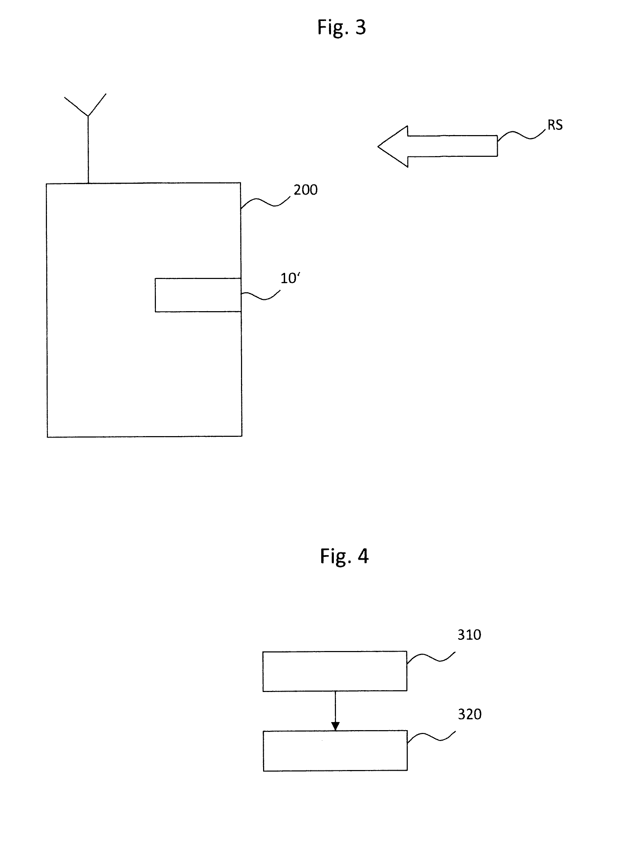

Figure 3 depicts a base station 200 according to an embodiment. The base station 200 comprises a receiver 10', which again may comprise the functionality as explained above with reference to figure 1. As such, the base station 200 is also enabled to assess a line of sight measure LM (Fig. 1) regarding the radio signals RS received by the base station 200.

Figure 4 schematically depicts a flow-chart of a method according to an embodiment. In a first step 310, the receiver 10 (figure 1) receives a radio signal RS. In subsequent step 320, the receiver 10 determines the line of sight measure LM (figure 1).

Optionally, after determination of the line of sight measure within step 320, the so obtained information may be at least temporarily stored within the receiver 10 and/or transmitted to an external device such as a data collecting station or the like.

According to a further embodiment, the determination of the LOS measure may be performed at a PHY (physical) layer (i.e., layer 1 of the OSI model), preferably at a PHY layer processing stage of the receiver 10. However, according to other embodiments, the determination of the LOS measure is not limited to the PHY layer, but may also alternatively or additionally be performed in other (higher) OSI layers.

For example, according to an embodiment, it is proposed to provide the following information: (1) synchronized sender/receiver clocks (preferably synchronized to an absolute time; effect: when sender transmits data at time t and receiver receives the data at t+Δt, the receiver knows that the propagation delay is Δt), (2) the distance between sender and receiver (e.g. derived from location information) and (3) a signal runtime measurement.

According to an embodiment, said receiver 10 is configured to determine said LOS measure depending on at least one channel impulse response of a radio channel, preferably depending on a plurality of channel impulse responses of said radio channel over time. According to a further embodiment, the channel impulse response of the radio channel may be determined by using pilot symbols transmitted to the receiver, said pilot symbols known to both the receiver and a transmitter which is sending said symbols. The pilot symbols may e.g. be defined by standardization. For example, when implementing the receiver according to the embodiments in an LTE (long term evolution) compatible mobile terminal, conventional LTE pilot symbols and/or channel measurement techniques for determining the channel impulse response may be used. Based on so obtained channel impulse response(s), the LOS measure LM (Fig. 1) may be determined.

A particularly precise determination of the LOS measure is enabled by an embodiment according to which a plurality of channel impulse responses are evaluated to obtain said LOS measure.

According to a further embodiment, said receiver 10 is configured to determine whether an earliest incoming path component of said channel impulse response corresponds with a strongest one of incoming path components of said channel impulse response. According to applicant's analysis, this criterion enables to precisely determine the LOS measure LM. Of course, this determination may also be performed for one channel impulse response and/or a plurality of channel impulse responses.

According to a further embodiment, said receiver 10 is configured to determine whether a strongest one of incoming path components of said channel impulse response has a non-fading component. According to an embodiment, a non-fading component may e.g. be defined as a portion of a channel impulse response which (or the amplitude of which, respectively) does not fall below a predetermined threshold value within a predetermined observing time window. In contrast to the non-fading component, a fading component would be defined as a portion of a channel impulse response which (or the amplitude of which, respectively) does fall below a predetermined threshold value within a predetermined observing time window.

According to a further embodiment, said receiver 10 is configured to evaluate a Doppler spectrum of said channel impulse response, preferably a Doppler spectrum of a strongest one of incoming path components of said channel impulse response. This contributes to an increased precision for determining said LOS measure LM.

According to a further embodiment, said receiver 10 is configured to evaluate a correlation between various channels defined by one or more transmit antennas used for transmitting said received radio signal and one or more receive antennas used for receiving said received radio signal. This also contributes to an increased precision for determining said LOS measure.

According to a further embodiment, said receiver 10 is configured to use at least one direction of arrival, DOA, estimation technique, such as e.g. MUSIC ("MUltiple SIgnal Classification") or ESPRIT ("Estimation of Signal Parameters using Rotational Invariance Techniques").

According to a further embodiment, said receiver 10 is configured to determine said LOS measure LM depending on a geographical position of said receiver 10 and/or said transmitter. This may preferably be done based on signal delay and distance calculation as mentioned above. Thereby, a further increase of precision regarding the LOS measure LM is enabled.

According to an embodiment, the terminal 100 (Fig. 1) is configured to associate RSSI (Relative Signal Strength Indicator) measurements with said LOS measure LM and/or with position information of said terminal 100. For example, if a high LOS measure is determined at a specific position of the terminal 100, meaning that from this position signal reception is performed under line of sight conditions, RSSI measurement results of the terminal may be transformed into distance information representing a distance between the terminal and a transmitter such as the base station.

According to an embodiment, LOS measure values associated with RSSI data and/or position information may e.g. be stored locally and/or forwarded to an external device (base station, further terminal, data base, and the like), for example for further evaluation, e.g., for finding model parameters for said simulations.

According to an embodiment, the base station 200 (Fig. 3) is configured to associate RSSI measurements with said LOS measure LM and/or with position information of a terminal 100, wherein the position information of a terminal 100 (terminal determines its position e.g. by using a GPS system or the like) may e.g. be signaled from the terminal 100 to the base station 200. Alternatively or in addition, the base station 200 (and/or the mobile network, i.e. network of base stations) may derive position information of the terminal 100 by means of triangulation.

According to a further embodiment, the base station 200 is configured to signal to a terminal a) whether said LOS measure is determined by the base station and/or b) said LOS measure.

According to a further embodiment, the determination of the LOS measure LM (Fig. 1) is based on an evaluation of channel impulse response (CIR) measurements, which may e.g. be based on pilot symbols in downlink and/or uplink direction and/or on sounding sequences in uplink direction. Alternatively or additionally, the determination of the LOS measure LM may be made depending on Timing-Advance measurements, i.e. determinations considering the so-called timing advance value known by the skilled man. Alternatively or additionally, position information of the receiver and/or transmitter, which transmits the respective RF signal RS, may also be considered for the determination of the LOS measure LM.

According to an embodiment, the LOS measure LM obtained according to the embodiments may be combined with other parameters (measured and/or calculated and/or determined in any other way, e.g. by simulation or the like) and/or measurements, preferably at the PHY layer. For example, the LOS measure LM obtained according to the embodiments may be combined with or associated with RSSI measurements. Such data (LOS measure LM alone and/or combined with other parameters) may, according to a further embodiment, be forwarded, for example by means of measurement APIs (application programming interface), to measurement consuming entities, such as data loggers.

According to a further embodiment, the LOS measure LM or information derived therefrom may be transmitted by the receiver 10 to at least one further device. For example, if the receiver 10 is located in a terminal 100 as depicted by Fig. 2, the LOS measure LM or information derived therefrom locally within the terminal 100 may be transmitted to e.g. a base station which serves said terminal 100 for further evaluation and/or processing, and vice versa.

According to a further embodiment, if the receiver 10 determining the LOS measure LM is located in a base station 200 (Fig. 3), a terminal served by the base station 200 may also signal its current position to the base station 200. The source for obtaining the terminal's location can in this case be the terminal itself (e.g., using GPS), or a network-based triangulation.

According to a further embodiment, the determination of the LOS measure LM can be based on single observations of pilot symbols (single-frame evaluations), wherein a single channel impulse response determination is made and the LOS measure LM is determined depending on said channel impulse response (CIR). Alternatively, a plurality of channel impulse response determinations may be made over time and the LOS measure LM is determined depending on a plurality of so obtained channel impulse responses.

According to a further embodiment, the determination of the LOS measure LM may also comprise considering temporal changes of the determined channel impulse responses. For example, strong temporal amplitude variations of a dominant tap (i.e., component) of the CIR indicate a NLOS (non-line of sight) situation.

According to a further embodiment, the determination of the LOS measure LM in a downlink (DL) direction, e.g. for transmission of radio signals RS (Fig. 1) from a base station to a terminal 100 comprising said receiver 10, may advantageously make use of pilot symbols of the respective communications standard used, particularly for the evaluation of properties of the CIR. As such pilot symbols are part of almost all cellular radio technologies, the determination of the LOS measure LM is particularly efficient in this configuration.

According to a further embodiment, the determination of the LOS measure in an uplink (UL) direction, i.e., evaluating the LOS measure LM at a base station, may be facilitated by terminals transmitting the radio signals RS (Fig. 3) also actively transmitting sounding sequences (e.g., signals known both to the transmitting terminal and the base station), which might explicitly be scheduled. E.g., within a conventional 3G or 4G cellular communications system, uplink resources usually used for uplink data transmissions may be employed to transmit sounding sequences (pilot signals) to the base station to enable the base station to perform channel measurements and/or determination of the LOS measure.

Optionally, in case a terminal has data traffic in the uplink direction, the associated uplink pilots / demodulation reference symbols may be used for determining the LOS measure at the base station 200.

According to a further embodiment, depending on whether the LOS measure LM or information derived therefrom is required at e.g. a base station (or generally at a network side) or at e.g. a terminal side (user side), and depending on where the LOS measure LM or information derived therefrom information is evaluated (for example, base station, terminal, external device (data base, cell planning system, and the like)), a signaling e.g. over the radio link between network side and terminal side might be provided. In one exemplary embodiment, the receiver 10 may indicate the LOS measure LM or information derived therefrom via a radio link to another device. In a particularly simple example, an indication derived from the LOS measure LM may e.g. indicate whether a radio path has substantially LOS conditions or NLOS (non-line of sight) conditions, which may be signaled by using only one bit. Of course, according to a further embodiment, a value of the LOS measure LM as determined by the receiver 10 or information derived therefrom may also be transmitted.

According to a further embodiment, for determining the LOS measure, the receiver 10 (Fig. 1) observes a set of channel impulse responses (CIR) over time. The CIRs may e.g. be obtained by conventional methods provided within standardized cellular communication networks. As such, the CIRs are e.g. available at the terminal 100 (Fig. 2), and the receiver 10 of the terminal 100 may determine the LOS measure LM based on the CIRs as determined by the terminal 100.

According to an embodiment, in case of e.g. OFDM or other multi-carrier systems such as LTE, the channel estimation typically is carried out in the frequency domain. The obtained frequency domain channel transfer function can be transformed into time domain by an inverse discrete Fourier transformation or an IFFT, whereby the CIR(s) are obtained.

According to an embodiment, in radio propagation, the radio signal propagates from a transmitter to a receiver on the direct path and/or via reflections at scattering clusters (furthermore effects like diffraction etc. may occur). According to this embodiment, incoming signal components, i.e., the delayed original signal and/or its "copies"/echoes arriving at the receiver, arrive with a certain propagation delay. A superposition of components which are non-time-resolvable (i.e. the receiver is not able to separate them due to its sampling bandwidth) forms one so-called tap of a time-discrete representation of the channel impulse response (CIR). So, a tap can be interpreted as a superposition of different signal contributions with the same propagation delay but different phase angles and can be described by a complex coefficient, where its amplitude/magnitude relates to the channel attenuation and its phase relates to the phase rotation of the channel.

According to an embodiment, the entire signal propagation can be mathematically described by convolving the channel impulse response with the signal at the radio channel input. In time-discrete representation (assuming the Nyquist criterion is fulfilled) the signal sampled at discrete time intervals is convolved with the corresponding time-discrete taps (e.g. represented in the same sample rate) of the channel impulse response.

According to an embodiment, when analyzing a set of channel impulse responses, one or more of the following conditions may be checked by the receiver 10. Depending on the specific conditions, the LOS measure LM may be determined. The LOS measure LM may be a scalar, but also a vector or matrix or another multidimensional parameter.
a) An earliest incoming path component of the CIR(s) corresponds with the strongest one (thus is the dominant tap) of the CIR. Optionally, it may also be determined whether other multi-path components of the CIR(s) are significantly weaker, e.g. below a predetermined threshold (e.g. relative to the total path gain).
b) A dominant tap of the CIR has a non-fading component. While there may be a non-time-resolvable fading component on this tap as well (caused e.g. by nearby reflections, i.e. ground reflections), a significant part of this tap does not fade. This means the squared absolute of the CIR coefficient corresponding to this dominant tap is above a certain threshold (e.g. relative to the total path gain) for an entire observation window.
c) When analyzing the Doppler spectrum of the dominant tap, it shows a dominating discrete Doppler shift component which is stronger than the Doppler spread components (caused by non-time-resolvable fading components like the above nearby reflection example). In order to measure this Doppler shift, it is beneficial to properly sample the propagation channel in time by the channel estimation. This means the available set of CIR observations is spaced dense enough to capture the maximum velocity which shall be supported by the system. The time series of complex channel coefficients corresponding to the first tap is transformed into frequency domain (by a DFT (discrete Fourier Transform) or FFT (Fast Fourier Transform)), resulting into the Doppler spectrum. According to one embodiment, it may be determined that a LOS condition is present if a strong discrete Doppler component will occur. In contrast, if an NLOS condition is more probable, a Doppler spread may be noticed, like e.g. the typical Jakes spectrum.
d) In case of multiple transmit and/or receive antennas, in order to meet a LOS condition, the channel observed between each possible transmit and receive antenna pair may have a high correlation, close to one, e.g. above a threshold. The correlation can be executed also in the frequency domain, e.g. across all the channel transfer function coefficients of all available pilot symbols, correlating all possible combinations of transmit and receive antenna pairs.
e) When a calibrated antenna array is available at one side of the link (thus phases and amplitudes of the receive signal RS (Fig. 1) are aligned), the receiver 10 or a device 100, 200 comprising the receiver 10 (e.g., terminal or base station) MS / BS may use direction-estimation techniques, like MUSIC or ESPRIT in order to detect the angle of arrivals of the incoming signal paths (and the signals RS), e.g. of the pilot signal. When additional positioning information is available, e.g. GPS data of both transmitter and receiver position (which might be exchanged via control signaling), the devices 100, 200 using the antenna array may compute a geometrical angular direction of the corresponding end of the link (either terminal 100 or base station 200). In case this geometrical angle coincides with the angle of arrival observed by the help of the direction estimation techniques, it may be concluded that a LOS situation is highly probable, and the LOS measure LM may be set accordingly. Otherwise, in case geometrical angle and signal angle of arrival are not matching, LOS may be excluded, and the LOS measure LM may be set accordingly.

According to an embodiment, the aforementioned paragraphs a) to e) and the criteria for assessing LOS conditions disclosed thereby may - either alone or in any combination of two or more of said paragraphs a) to e) - be considered when determining the LOS measure LM.

Subsequently, a further embodiment is disclosed, wherein the receiver 10 is located in a terminal 100, similar to the configuration of Fig. 2. In the present embodiment, downlink pilot symbols received at the terminal 100 from a base station serving said terminal 100 are used for channel estimation, or determination of the CIR, respectively, and thus no extra radio resource are required for CIR determination. After determination of the CIR, the receiver 10 according to the present embodiment determines the LOS measure LM according to any of the afore-explained techniques. The determination is preferably performed within the PHY layer (layer 1 of the OSI model). Optionally, a so obtained LOS measure LM is associated with RSSI measurements also obtained at the terminal 100. Optionally, the LOS measure LM and/or the associated RSSI measurements are also associated with position information of the terminal 100, and the obtained data is stored locally and/or transmitted to an external device such as a base station serving the terminal or a remote system. For example, the LOS measure determined by the terminal 100 may also be transmitted to said base station in an uplink signaling channel, e.g. for logging and/or data collection purposes.

Subsequently, a further embodiment is disclosed, wherein the receiver 10 is located in a base station 200, similar to the configuration of Fig. 3. In the present embodiment, a terminal (not shown) is scheduled to transmit sounding symbols in uplink direction or transmits pilot symbols, e.g. along with uplink data transmission. According to the present embodiment, these sounding/pilot symbols are evaluated at the base station 200 to determine the LOS measure LM. According to an embodiment, the PHY layer (OSI layer 1) at the base station evaluates the transmission properties exploiting the pilot and sounding symbols, which are comprised in the RF signal RS, applying one or more of the procedures described above. Optionally, RSSI signal strength measurement procedures are then (in addition to standard features) provided or associated with the LOS measure before they are submitted to higher layers. Optionally, the terminal which transmits the RF signals RS also transmits its location information, e.g., measured using radio fingerprinting databases and/or GPS, to the base station 200 in order to gather information useful for describing start and/or end points of the radio channel considered in the context of the determination of the LOS measure LM.

Also optionally, the base station 200 (together with other base stations) triangulates the position of the transmitting terminal according to network-based positioning concepts.

According to a further embodiment, conventional signaling between terminals and base stations, e.g. according to a certain standard such as 3GPP or the like, may be enhanced by adding the LOS measure determined by the receiver 10. Alternatively or additionally, conventional signaling may be enhanced by signaling whether a base station 200 and/or terminal 100 supports the determination of the LOS measure LM and/or comprises a suitable receiver 10.

The principle according to the embodiments advantageously enables to improve evaluation and usage of radio channel measurements, particularly between base stations and terminals of cellular communications networks. For example, the LOS measure determined in accordance with the embodiments can be used to enhance existing cell planning methods or to improve simulation models dealing with radio coverage determination and the like. Additionally, the LOS measure LM determined in accordance with the embodiments may be used for upcoming smart network management solutions. Wireless networks with millions of spatially distributed users and terminals are a rich source for raw measurements that can be used for such purposes. Thereby, existing radio coverage maps may be supplemented by precise LOS information for a wide range of geographical positions.

Further, the LOS information that may be determined in accordance with the principle of the embodiments will significantly improve the value of geo-views that can be derived from lists of measurements for the current approach of model-based evaluations.

Particularly, the principle of the embodiments helps to improve estimations about model-based radio coverage.

Geo-views are measurement-based views about the coverage of the cells of cellular access networks much below the granularity of cells. These views can be about various radio coverage properties, in the most obvious case about receive signal strengths over the area. A more complex example would be the pilot pollution spatially resolved over the cell areas. Such geo-views are important for new network management concepts and also allow creating new types of business. Examples for the use of geo-views are (1) network-re-planning, e.g., to identify optimal places for small cells, (2) geo-SON features, e.g., to calculate optimal antenna tilt angles during network operations, and (3) further monetization for spatially resolved information about network coverage and user flows, e.g,., for advertisement services or city planning. The application of the principle according to the embodiments also enables to create more precise model-based views about radio propagation conditions.

Conventional model-based views are derived from actual measurements of transmission links using fitting techniques. The fittings are done according to a list of single measurements that include (a) of the position of terminals and (b) the signal property between the base station and the terminals. Model-fittings usually require knowing which type of radio path propagation (which model) is to be expected. In this context, the LOS measure LM determined according to the embodiments may advantageously be used to support the model fittings.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Receiver (10) for a cellular communications network, wherein said receiver (10) is configured to receive radio signals (RS) from at least one further device, particularly from a transmitter of a cellular communications network, wherein said receiver (10) is configured to determine for at least one received radio signal (RS) a line of sight, LOS, measure (LM), wherein said line of sight measure (LM) comprises information on LOS conditions associated with said received radio signal (RS).

2. Receiver (10) according to claim 1, wherein said receiver (10) is configured to determine said LOS measure (LM) depending on at least one channel impulse response of a radio channel, preferably on a plurality of channel impulse responses of said radio channel over time.

3. Receiver (10) according to claim 2, wherein said receiver (10) is configured to determine whether an earliest incoming path component of said channel impulse response corresponds with a strongest one of incoming path components of said channel impulse response.

4. Receiver (10) according to one of the claims 2 to 3, wherein said receiver (10) is configured to determine whether a strongest one of incoming path components of said channel impulse response has a non-fading component.

5. Receiver (10) according to one of the claims 2 to 4, wherein said receiver (10) is configured to evaluate a Doppler spectrum of said channel impulse response, preferably a Doppler spectrum of a strongest one of incoming path components of said channel impulse response.

6. Receiver (10) according to one of the claims 2 to 5, wherein said receiver (10) is configured to evaluate a correlation between various channels defined by one or more transmit antennas used for transmitting said received radio signal (RS) and one or more receive antennas used for receiving said received radio signal (RS).

7. Receiver (10) according to one of the preceding claims, wherein said receiver (10) is configured to use at least one direction of arrival, DOA, estimation technique.

8. Receiver (10) according to one of the preceding claims, wherein said receiver (10) is configured to determine said LOS measure (LM) depending on a geographical position of said receiver (10) and/or said transmitter.

9. Terminal (100) for a cellular communications network, wherein said terminal (100) comprises at least one receiver (10) according to the preceding claims.

10. Terminal (100) according to claim 9, wherein said terminal (100) is configured to associate RSSI measurements with said LOS measure (LM) and/or with position information of said terminal (100).

11. Terminal (100) according to one of the claims 9 to 10, wherein said terminal (100) is configured to provide RSSI measurements and/or said LOS measure (LM) and/or position information of said terminal (100), to a further device, preferably by means of an application programming interface.

12. Base station (200) for a cellular communications network, wherein said base station (200) comprises at least one receiver (10) according to the claims 1 to 8.

13. Base station (200) according to claim 12, wherein the base station (200) is configured to associate RSSI measurements with said LOS measure (LM) and/or with position information of a terminal (100) and/or with position information of said base station (200).

14. Base station (200) according to one of the claims 12 to 13, wherein the base station (200) is configured to signal to a terminal a) whether said LOS measure is determined by the base station (200) and/or b) said LOS measure.

15. Method of operating a receiver (10) for a cellular communications network, wherein said receiver (10) is configured to receive radio signals from at least one further device, particularly from a transmitter of a cellular communications network, wherein said receiver (10) determines for at least one received radio signal (RS) a line of sight, LOS, measure (LM), wherein said line of sight measure (LM) comprises information on LOS conditions associated with said received radio signal (RS).
